(19) **Europäisches Patentamt / European Patent Office / Office européen des brevets**

(11) **EP 1 928 245 B2**

(12) **NEW EUROPEAN PATENT SPECIFICATION**
After opposition procedure

(45) Date of publication and mention
of the opposition decision:
**06.07.2016 Bulletin 2016/27**

(45) Mention of the grant of the patent:
**24.11.2010 Bulletin 2010/47**

(21) Application number: **06798116.7**

(22) Date of filing: **13.09.2006**

(51) Int Cl.:
**A01N 47/36** (2006.01)   **A01N 43/70** (2006.01)
**A01P 13/00** (2006.01)

(86) International application number:
**PCT/JP2006/318555**

(87) International publication number:
**WO 2007/037152 (05.04.2007 Gazette 2007/14)**

(54) **HERBICIDAL COMPOSITION**

HERBIZIDE ZUSAMMENSETZUNG

PRÉPARATION HERBICIDE

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK RS**

(30) Priority:  **28.09.2005 JP 2005282988
30.03.2006 JP 2006093026**

(43) Date of publication of application:
**11.06.2008 Bulletin 2008/24**

(73) Proprietor: **ISHIHARA SANGYO KAISHA, LTD.
Osaka-shi,
Osaka 550-0002 (JP)**

(72) Inventors:
• **YOSHII, Hiroshi
Kusatsu-shi, Shiga 525-0025 (JP)**
• **OHNO, Ken
Kusatsu-shi, Shiga 525-0025 (JP)**
• **YAMADA, Ryu
Kusatsu-shi, Shiga 525-0025 (JP)**

(74) Representative: **Hartz, Nikolai
Wächtershäuser & Hartz
Patentanwaltspartnerschaft mbB
Weinstrasse 8
80333 München (DE)**

(56) References cited:
WO-A2-93/21772      WO-A2-03/073853
DE-A1- 19 520 839

• **ROLSTON M P ET AL: "Grass weed control and
herbicide tolerance in cereals" NEW ZEALAND
PLANT PROTECTION, vol. 56, 2003, pages
220-226, XP001248843 ISSN: 1175-9003**
• **G. GOLD, DIPL.-ING.: 'SL 950 und seine
Kombinationspartner Lido® SC und Gardoprim
500 FW' PFLANZENARZT vol. 49, no. 5, 1996,
page 19**
• **Entry "Artett-Motivell-Pack" in BASF Product
Manual "Pflanzenschutzmittel. Blatt- und
Spurennährstoffünger 2002". pp. 61-62**
• **Kulturenratgeber 2004 Hessen-BASF im
Ackerbau, Section Mais**
• **H. SCHOLZ: 'Die Unkraut-Hirse (Panicum
miliaceum subsp. ruderale - neue Tatsachen und
Befunde' PLANT SYSTEMATICS AND
EVOLUTION vol. 143, 1983, pages 233 - 244**
• **H. KLAAßEN ET AL.: 'Ackenrunkräuter und
Ackerungräser rechtzeitig erkennen, Profi
Wissen', 2004, BASF AG, LIMBURGERHOF**
• **J. GLAUNINGER: '"Hirse" probleme' DER
PFLANZENARZT April 2003, pages 8 - 10**

Remarks:
The file contains technical information submitted after
the application was filed and not included in this
specification

EP 1 928 245 B2

**Description**

TECHNICAL FIELD

The present invention relates to method for controlling undesired plants or inhibiting their growth according to claim 1, which comprises applying a herbicidal composition consisting of (A) 2-(4,6-dimethoxypyrimidin-2-ylcarbamoylsulfamoyl)-N,N-dimethylnicotinamide or its salt (hereinafter referred to simply as compound A), (B) $N^2$-tert-butyl-6-chloro-$N^4$-ethyl-1,3,5-triazine-2,4-diamine or its salt (hereinafter referred to simply as compound B), and additives.

BACKGROUND ART

Patent Document 1 discloses compound A but does not disclose its combined use with compound B.
Patent Document 1: EP0232067A
WO 03/073853, DE 19520839, WO 93/21772 and Rolston et al. "Grass weed control and herbicide tolerance in cereals", New Zealand Plant Protection, vol. 56, 2003, pp 220-226 discloses synergistic mixtures of terbuthylazine with various sulfonylurea herbicides.

DISCLOSURE OF THE INVENTION

PROBLEMS TO BE SOLVED BY THE INVENTION

Many herbicidal compositions have been developed and practically used. However, types of weeds to be controlled are also many, and their emergence extends over along period. Accordingly, it is desired that a herbicidal composition be developed which has a wider herbicidal spectrum and which is highly active and has a long lasting effect.

MEANS TO SOLVE THE PROBLEMS

The present inventors have conducted a research to solve the above problems and as a result, have found it possible to obtain a highly practical herbicidal composition.
Namely, the present invention provides a method for controlling undesired plants or inhibiting their growth according to claim 1, which comprises applying a herbicidally effective amount of a herbicidal composition consisting of (A) compound A i.e. 2-(4,6-dimethoxypyrimidin-2-ylcarbamoylsulfamoyl)-N,N-dimethylnicotinamide (common name: nicosulfuron) or its salt, (B) compound B i.e. $N^2$-tert-butyl-6-chloro-$N^4$-ethyl-1,3,5-triazine-2,4-diamine (common name: terbuthylazine) or its salt and additives to the undesired plants or to a place where they grow.

EFFECTS OF THE INVENTION

The herbicidal composition used in the present invention is capable of controlling a wide range of weeds emerging in cropland and non-cropland, and it surprisingly presents a synergistic herbicidal effect i.e. a herbicidal effect higher than the mere addition of the respective herbicidal effects of the active ingredients. With such a herbicidal composition used in the present invention, not only it can be applied at a low dose as compared with a case where the respective active ingredients are applied individually, but also the herbicidal spectrum will be enlarged, and further the herbicidal effects will last over a long period of time.
When the herbicidal activity in a case where two active ingredients are combined, is larger than the simple sum of the respective herbicidal activities of the two active ingredients (the expected activity), it is called a synergistic effect. The activity expected by the combination of two active ingredients can be calculated as follows (Colby S.R., "Weed", vol. 15, p. 20-22, 1967).

$$E = \alpha + \beta - (\alpha \times \beta \div 100)$$

where $\alpha$ : growth inhibition rate when treated with x (g/a) of herbicide X,
$\beta$ : growth inhibition rate when treated with y (g/a) of herbicide Y,
E: growth inhibition rate expected when treated with x (g/a) of herbicide X and y (g/a) of herbicide Y.

Namely, when the actual growth inhibition rate (observed value) is larger than the growth inhibition rate by the above calculation (expected value), the activity by the combination can be regarded as showing a synergistic effect. The herbicidal composition used in the present invention shows a synergistic effect when calculated by the above formula.

BEST MODE FOR CARRYING OUT THE INVENTION

The salt included in compound A or B may be any salt so long as it is agriculturally acceptable, and it may, for example, be an alkali metal salt such as a sodium salt or a potassium salt; an alkaline earth metal salt such as a magnesium salt or a calcium salt; an ammonium salt such as a monomethylammonium salt, a dimethylammonium salt or a triethylammonium salt; an inorganic acid salt such as a hydrochloride, a perchlorate, a sulfate or a nitrate; or an organic acid salt such as an acetate or a methanesulfonate.

As compound A, compounds having different crystal forms may sometimes be obtained depending upon the production conditions. The present invention includes all of such compounds, and it also includes compounds having such compounds hydrated.

In the present invention, the mix ratio of compound A and compound B varies depending upon various conditions such as the formulation, weather conditions, the types and growth conditions of the plants to be controlled and can not generally be defined. However, compound B is in an amount of from 1 to 250 parts by weight, per 1 part by weight of compound A.

The present invention is a method for controlling undesired plants or inhibiting their growth according to claim 1, which comprises applying a herbicidally effective amount of the herbicidal composition. In its application, the application to the undesired plants or the application to a place where they grow (either before or after the emergence of the undesired plants) may optionally be selected.

The application amount of the herbicidal composition used in the present invention can not generally be defined, since it varies depending upon various conditions such as the mix ratio of compound A and compound B, the formulation, weather conditions, the types and growth conditions of the plants to be controlled. However, compound A is usually from 1 to 200 g/ha, preferably from 2.5 to 100 g/ha, and compound B is usually from 100 to 5,000 g/ha, preferably from 200 to 2,500 g/ha. And, the suitable total application amount of compounds A and B is usually from 101 to 5,200 g/ha, preferably from 202.5 to 2,600 g/ha.

The present invention is a method for controlling undesired plants or inhibiting their growth, which comprises applying compound A and compound B in the respectively above-mentioned application amounts or applying them in the above-mentioned suitable total application amount. In the application, the application to the undesired plants or the application to a place where they grow (either before or after the emergence of the undesired plants) may optionally be selected.

The undesired plant according to the present invention is crabgrass (Digitaria sanguinalis L). Further, the herbicidal composition used in the present invention is capable of providing good effects when applied at either stage of before or after the germination of the weeds.

The herbicidal composition used in the present invention may take various application forms such as soil application, foliar application, irrigation and water application and is useful for controlling undesired plants in agricultural fields such as upland fields, orchards or paddy fields, or non-agricultural fields such as levee, fallow field, play grounds, vacant grounds, forests, factory sites, railway sides or road sides.

The herbicidal composition used in the present invention is prepared by mixing compound A and compound B, as active ingredients, with various additives in accordance with conventional formulation methods for agricultural chemicals, and applied in the form of various formulations such as dusts, granules, water dispersible granules, wettable powders, tablets, pills, capsules (including a formulation packaged by a water soluble film), water-based suspensions, oil-based suspensions, microemulsions, suspoemulsions, water soluble powders, emulsifiable concentrates, soluble concentrates or pastes. It may be formed into any formulation which is commonly used in this field, so long as the object of the present invention is thereby met.

At the time of the formulation, compound A and compound B may be mixed together for the formulation, or they may be separately formulated and mixed together at the time of the application.

The additives to be used for the formulation include, for example, a solid carrier such as diatomaceous earth, slaked lime, calcium carbonate, talc, white carbon, kaoline, bentonite, a mixture of kaolinite and sericite, clay, sodium carbonate, sodium bicarbonate, mirabilite, zeolite or starch; a solvent such as water, toluene, xylene, solvent naphtha, dioxane, acetone, isophorone, methyl isobutyl ketone, chlorobenzene, cyclohexane, dimethyl sulfoxide, N,N-dimethylformamide, dimethylacetamide, N-methyl-2-pyrrolidone or an alcohol; an anionic surfactant such as a salt of fatty acid, a benzoate, a polycarboxylate, a salt of alkylsulfuric acid ester, an alkyl sulfate, an alkylaryl sulfate, an alkyl diglycol ether sulfate, a salt of alcohol sulfuric acid ester, an alkyl sulfonate, an alkylaryl sulfonate, an aryl sulfonate, a lignin sulfonate, an alkyldiphenyl ether disulfonate, a polystyrene sulfonate, a salt of alkylphosphoric acid ester, an alkylaryl phosphate, a styrylaryl phosphate, a salt of polyoxyethylene alkyl ether sulfuric acid ester, a polyoxyethylene alkylaryl ether sulfate, a salt of polyoxyethylene alkylaryl ether sulfuric acid ester, a polyoxyethylene alkyl ether phosphate, a salt of polyoxyethylene alkylaryl phosphoric acid ester, a salt of polyoxyethylene aryl ether phosphoric acid ester, a naphthalene sulfonic acid condensed with formaldehyde or an alkylnaphthalene sulfonate condensed with formaldehyde; a nonionic surfactant such as a sorbitan fatty acid ester, a glycerin fatty acid ester, a fatty acid polyglyceride, a fatty acid alcohol polyglycol ether, acetylene glycol, acetylene alcohol, an oxyalkylene block polymer, a polyoxyethylene alkyl ether, a polyoxyethylene alkylaryl ether, a polyoxyethylene styrylaryl ether, a polyoxyethylene glycol alkyl ether, polyethylene glycol, a polyoxyethylene fatty acid ester, a polyoxyethylene sorbitan fatty acid ester, a polyoxyethylene glycerin fatty acid ester, a polyoxyethylene hydrogenated castor oil or a polyoxypropylene fatty acid ester; and a vegetable oil or mineral oil such as olive oil, kapok oil, castor oil, palm oil, camellia oil, coconut oil, sesame oil, corn oil, rice bran oil, peanut oil, cottonseed oil, soybean oil, rapeseed oil, linseed oil, tung oil or liquid paraffins. These additives may suitably selected for use alone or in combination as a mixture of two or more of them, so long as the object of the present invention is met. Various additives commonly used, such as a filler, a thickener, an anti-settling agent, an anti-freezing agent, a dispersion stabilizer, a safener, an anti-mold agent, a bubble agent, a disintegrator and a binder, may be used. The mix ratio by weight of the active ingredients to such various additives in the herbicidal composition of the present invention may be from 0.001:99.999 to 95:5, preferably from 0.005:99.995 to 90:10.

As a method for applying the herbicidal composition in the present invention, various methods may be employed and may suitably be selected for use depending upon various conditions such as the application sites, the formulations, the types or growth conditions of the plants to be controlled. For example, the following methods may be mentioned.

1. Compound A and compound B are mixed together to prepare a formulation, which is applied as it is.
2. Compound A and compound B are mixed together to prepare a formulation which is diluted to a predetermined concentration with e.g. water, and, if necessary, various additives (a surfactant, a vegetable oil, a mineral oil, etc.) are added, followed by the application.
3. Compound A and compound B are separately formulated and then mixed at the time of diluting them to the predetermined concentrations by e.g. water, and if necessary, various additives (a surfactant, a vegetable oil, a mineral oil, etc.) are added, followed by the application.

Now, some preferred embodiments of the present invention will be exemplified.

(1) A method for controlling undesired plants or inhibiting their growth as described above, which comprises applying a herbicidally effective amount of a herbicidal composition consisting of 2-(4,6-dimethoxypyrimidin-2-ylcarbamoylsulfamoyl)-N,N-dimethylnicotinamide (hereinafter referred to simply as compound A-1), $N^2$-tert-butyl-6-chloro-$N^4$-ethyl-1,3,5-triazine-2,4-diamine (hereinafter referred to simply as compound B-1), and additives to the undesired plants or to a place where they grow.

EXAMPLES

Now, Formulation Examples for the herbicidal composition used in the present invention will be described.

FORMULATION EXAMPLE 1

| | | |
|---|---|---|
| (1) | Compound A-1 | 1 part by weight |
| (2) | Compound B-1 | 20 parts by weight |
| (3) | Supragil MNS/90 (sodium alkylnaphthalene sulfonate condensed with formaldehyde) | 3 parts by weight |
| (4) | NEWKALGEN BX-C (sodium dialkylnaphthalene sulfonate) | 4 parts by weight |
| (5) | Diatomaceous earth | 72 parts by weight |

The above respective components are mixed to obtain a wettable powder.

FORMULATION EXAMPLE 2

| | | |
|---|---|---|
| (1) | Compound A-1 | 1 part by weight |
| (2) | Compound B-1 | 40 parts by weight |
| (3) | Supragil MNS/90 | 8 parts by weight |

(continued)

| | | | |
|---|---|---|---|
| (4) | Geropon T/36 (sodium polycarboxylate) | | 3 parts by weight |
| (5) | Kaolin | | 48 parts by weight |

The above respective components are mixed, and then water was added, followed by kneading, extrusion granulation, drying and sieving to obtain water dispersible granules.

FORMULATION EXAMPLE 3

| | | |
|---|---|---|
| (1) | Compound A-1 | 0.3 part by weight |
| (2) | Compound B-1 | 7.5 parts by weight |
| (3) | GERONOL VO/278 (glycerol fatty acid ester) | 10 parts by weight |
| (4) | Methyl ester of vegetable oil | 80.2 parts by weight |
| (5) | New D Orben (Bentonite-alkylamino complex) | 2 parts by weight |

The above respective components are uniformly mixed and milled by a Dyno-mill to obtain a suspension. Notes:

Supragil MNS/90 and Geropon T/36: tradenames, manufactured by Rhodia Nicca, Ltd.
NEWKALGEN BX-C: tradename, manufactured by TAKEMOTO OIL AND FAT Co., Ltd.
GERONOL VO/278: tradename, manufactured by Rhone-Poulenc
New D Orben: tradename, manufactured by Shiraishi Kogyo Kaisha, Ltd.

TEST EXAMPLE 1

Upland field soil was put into a 1/1,000,000 ha pot, and seeds of various plants were sown. Then, when the plants reached the prescribed leaf stages ((1) 3.6 leaf stage of crabgrass (Digitaria sanguinalis L.), and (2) 2.8 leaf stage of velvetleaf (Abutilon theophrasti MEDIC.)), a prescribed amount of the herbicidal composition was diluted with water corresponding to 300 L/ha, and foliar application was carried out by means of a small size spray. On the 21st day after the application, the state of growth of each plant was visually observed, and the growth inhibition rate (%) evaluated in accordance with the following evaluation standard (observed value) and the growth inhibition rate (%) calculated by the above-mentioned Colby method (expected value) are shown in Tables 1 and 2.

```
Growth inhibition rate (%) = 0% (equivalent to the

non-treated area) to 100% (complete kill)
```

TABLE 1

| Compound | Amount of application of active ingredients (g/ha) | Crabgrass | |
|---|---|---|---|
| | | Growth inhibition rate (%) | |
| | | Observed | Expected |
| A-1 | 25 | 53 | - |
| B-1 | 250 | 5 | - |
| | 500 | 8 | - |
| A-1 + B-1 | 25+250 | 66 | 55 |
| | 25+500 | 67 | 58 |

TABLE 2 (Reference)

| Compound | Amount of application of active ingredients (g/ha) | Velvetleaf | |
|---|---|---|---|
| | | Growth inhibition rate (%) | |
| | | Observed | Expected |
| A-1 | 50 | 60 | - |
| B-1 | 250 | 57 | - |
| | 500 | 58 | - |
| A-1 + B-1 | 50+250 | 88 | 83 |
| | 50+500 | 100 | 83 |

**Claims**

**1.** A method for controlling undesired plants or inhibiting their growth which comprises applying a herbicidally effective amount of a herbicidal composition consisting of

(A) 2-(4,6-dimethoxypyrimidin-2-ylcarbamoylsulfamoyl)-N,N-dimethylnicotinamide or its salt,
(B) $N^2$-tert-butyl-6-chloro-$N^4$-ethyl-1,3,5-triazine-2,4-diamine or its salt, and additives,

said composition being prepared by mixing compound A and compound B, as active ingredients, wherein the mix ratio of (A) and (B) is such that (B) is from 1 to 250 parts by weight per 1 part by weight of (A), with additives, to the undesired plants or to a place where they grow, **characterized in that**
said undesired plant being crabgrass (Digitaria sanguinalis L.) and **in that** said composition presenting a synergistic herbicidal effect, whereby the activity of the combination of (A) and (B) is regarded as showing a synergistic effect when the observed value of the actual growth inhibition rate is larger than the expected value of the growth inhibition rate calculated by the following formula:

$$E = \alpha + \beta - (\alpha \times \beta / 100)$$

E: growth inhibition rate expected when treated with x (g/a) of herbicide (A) and y (g/a) of herbicide (B).
$\alpha$: growth inhibition rate when treated with x (g/a) of herbicide (A),
$\beta$: growth inhibition rate when treated with y (g/a) of herbicide (B).

**Patentansprüche**

**1.** Verfahren zur Kontrolle ungewünschter Pflanzen oder zur Inhibierung von deren Wachstum, umfassend ein Anwenden einer herbizidaktiven Menge einer Herbizidzusammensetzung, bestehend aus

(A) 2-(4,6-Dimethoxypyrimidin-2-ylcarbamoylsulfamoyl)-N,N-dimethylnicotinamid oder dessen Salz,
(B) $N^2$-tert-Butyl-6-chloro-$N^4$-ethyl-1,3,5-triazine-2,4-diamin, oder dessen Salz, sowie
Additiven,

wobei die Zusammensetzung hergestellt wird durch Vermischen von Verbindung A und Verbindung B als aktive Bestandteile mit Additiven, wobei das Mischungsverhältnis von (A) und (B) dergestalt ist, dass (B) zu 1 bis 250 Gewichtsteilen pro 1 Gewichtsteil von (A) vorliegt, auf die ungewünschten Pflanzen oder an einen Ort, wo diese wachsen, **dadurch gekennzeichnet dass**
die unerwünschte Pflanze Blutfingerhirse (*Digitaria Sanguinalis L*.) ist und dadurch, dass die Zusammensetzung einen synergistischen herbiziden Effekt zeigt, wobei die Aktivität der Kombination von (A) und (B) als einen synergistischen Effekt zeigend angesehen wird, wenn der beobachtete Wert der tatsächlichen Wachstumsinhibitionsrate größer ist als der erwartete Wert der Wachstumsinhibitionsrate, der durch die folgende Formel berechnet wird:

$$E = \alpha + \beta - (\alpha \times \beta/100)$$

E: Wachstumsinhibitionsrate die erwartet wird, wenn mit x (g/a) des Herbizids (A) und y (g/a) des Herbizids (B) behandelt wird,

$\alpha$: Wachstumsinhibitionsrate, wenn mit x (g/a) von Herbizid (A) behandelt wird,

$\beta$: Wachstumsinhibitionsrate, wenn mit y (g/a) von Herbizid (B) behandelt wird.

## Revendications

1. Procédé pour lutter contre des plantes indésirables ou inhiber leur croissance, qui comprend l'application d'une quantité efficace du point de vue herbicide d'une composition herbicide constituée

   (A) de 2-(4,6-diméthoxypyrimidin-2-ylcarbamoylsulfamoyl)-N,N-diméthylnicotinamide ou de son sel,
   (B) de $N^2$-tert-butyl-6-chloro-$N^4$-éthyl-1,3,5-triazine-2,4-diamine ou de son sel,
   et d'additifs,

   ladite composition étant préparée par mélange du composé A et du composé B, servant d'agents actifs, dans laquelle le rapport de mélange de (A) et (B) est tel qu'il y a de 1 à 250 parts en masse de (B) pour 1 part en masse de (A), avec des additifs,
   aux plantes non souhaitées ou à l'endroit où elles poussent, **caractérisé en ce que**
   lesdites plantes non souhaitées sont la digitaire sanguine (Digitaria sanguinalis L.) et **en ce que** ladite composition présente un effet herbicide synergique, où il est considéré que l'activité de la combinaison de (A) et (B) présente un effet synergique quand la valeur observée du taux réel d'inhibition de croissance est supérieure à la valeur prévue du taux d'inhibition de croissance calculée par la formule suivante :

   $$E = \alpha + \beta - (\alpha \times \beta/100)$$

   E : taux prévu d'inhibition de croissance lors d'un traitement avec x (g/a) d'herbicide (A) et y (g/a) d'herbicide (B) ;
   $\alpha$ : taux d'inhibition de croissance lors d'un traitement avec x (g/a) d'herbicide (A),
   $\beta$ : taux d'inhibition de croissance lors d'un traitement avec y (g/a) d'herbicide (B).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0232067 A
- WO 03073853 A
- DE 19520839
- WO 9321772 A

**Non-patent literature cited in the description**

- **ROLSTON et al.** Grass weed control and herbicide tolerance in cereals. *New Zealand Plant Protection,* 2003, vol. 56, 220-226
- **COLBY S.R.** *Weed,* 1967, vol. 15, 20-22